Europäisches Patentamt

European Patent Office

Office européen des brevets

(19)

(11) Veröffentlichungsnummer: **0 203 302 B1**

(12) **EUROPÄISCHE PATENTSCHRIFT**

(45) Veröffentlichungstag der Patentschrift: **15.05.91**

(51) Int. Cl.⁵: **G11B 23/087**

(21) Anmeldenummer: **86103972.5**

(22) Anmeldetag: **22.03.86**

(54) **Bandkassette, insbesondere Magnetbandkassette, mit Führungsfolie.**

(30) Priorität: **02.04.85 DE 8509882 U**

(43) Veröffentlichungstag der Anmeldung:
**03.12.86 Patentblatt 86/49**

(45) Bekanntmachung des Hinweises auf die
Patenterteilung:
**15.05.91 Patentblatt 91/20**

(84) Benannte Vertragsstaaten:
**BE CH DE FR GB IT LI NL SE**

(56) Entgegenhaltungen:
CH-A- 590 784        DE-A- 2 251 746
DE-A- 2 736 760      DE-U- 8 509 882
GB-A- 2 000 104      GB-A- 2 047 200
US-A- 3 804 351      US-A- 3 977 626
US-A- 4 102 515

(73) Patentinhaber: **BASF Aktiengesellschaft
Carl-Bosch-Strasse 38
W-6700 Ludwigshafen(DE)**

(72) Erfinder: **Schaeffer, Norbert
Vogelsang 19
W-6705 Deidesheim(DE)**
Erfinder: **Pfefferkorn, Dietmar
Muehlweg 71
W-6944 Hemsbach(DE)**
Erfinder: **Sold, Roland
Rheingoenheimer Strasse 1
W-6704 Mutterstadt(DE)**
Erfinder: **Brinkmann, Uwe
Allmendstrasse 8
W-7640 Kehl(DE)**
Erfinder: **Kreitner, Ludwig, Dr.
Liebigstrasse 10
W-6148 Heppenheim(DE)**
Erfinder: **Sigwalt, Roland
Rue d' Ouessant 6
F-67230 Obenheim-Benfeld(FR)**

## Beschreibung

Die Erfindung betrifft eine Bandkassette, insbesondere Magnetbandkassette, mit mindestens einem Bandwickel auf einem im wesentlichen flanschlosen Wickelkern mit einem Außendurchmesser, auf den und/oder von dem ein Band auf- bzw. abwickelbar ist, wobei zwischen den Bandwindungen aufweisenden Bandwickel und den Boden- und Deckelwänden der Kassette Folien mit in Richtung zur Mittelebene der Kassette abgebogenen oder abgeknickten einander zugeordneten und in bezug auf die Kassettenmittelachse einander gegenüberliegenden Folienbereichen vorgesehen sind, die federnd auf den oder die Bandwickel drücken, wobei der Foliendruck auf den Bandwickelumfang, der der Kassettenrückseite zugewandt ist, durch den Rückseitenfolienbereich ausgeübt wird und der Foliendruck auf den Bandwickelvorderteil, der der Kassettenfrontseite zugewandt ist, durch den Frontseitenfolienbereich ausgeübt wird.

Mit der DE-PS 2 251 746 ist eine Magnetbandkassette mit Führungsfolien der eingangs beschriebenen Art bekannt. Dabei beginnen die abgeknickten Folienrandflächen zwischen dem durch den halben und maximalen Radius bestimmten Umfang des Bandwickels, so daß die Führung erst bei halbem Wickeldurchmesser einsetzt und dadurch eine Stufenbildung hervorruft, die im schlechtesten Fall zum Festlaufen der Bandwickel in der Kassette oder zumindest zu bleibender Bandbeschädigung führt. Der Mittelteil der bekannten Folie liegt jeweils plan an der Kassetteninnenwand an und übt keinerlei Führungs- oder Zentrierungseinfluß am Wickelkern aus. Wenn eine vordere, in der Nähe der Frontseite der Kassette angeordnete, zur Folienlängsachse parallele Knickkante vorgesehen ist oder wenn Seitenabknickungen vorhanden sind, wird der auf- bzw. ablaufende Bandabschnitt umgeklappt oder dessen Bandkante beschädigt, so daß mechanische und elektroakustische Schäden auftreten. Durch zeitweise Folienberührung mit besagtem, freien Bandabschnitt können auch wow- und Flutter-Störungen auftreten oder verstärkt werden. Die bekannten Folienausbildungen umfassen auch kreisförmig über und unter jedem Bandwickel angeordnete, sogenannte Führungskanäle mit Ein- und Auslauföffnungen für das auf- bzw. ablaufende Magnetband. Derartige Folien sind herstellungsgemäß und montagemäßig für eine Massenherstellung zu aufwendig.

Ferner sind mit der US-PS 3 977 626 Folien bekannt, die mindestens Radial- oder Längsknicke oder -kanten zur Wickelkernzentrierung aufweisen, wobei die Knicke oder Kanten dem Wickelkern zugewandt angeordnet sind, und die außerdem einen Führungskanal an der Kassettenrückseite aufweisen zum Verhindern des Bandasbrutschens und Festlaufens der Bandwickel. Die Zentrierwirkung auf die Wickelkerne ist relativ konstant und unabhängig von der jeweiligen Betriebssituation der Kassette.

Mit der DE-OS 27 36 760 ist eine Folie für Tonbandkassetten bekannt, die mittels Falzpressungen direkt auf den Wickelkern wirken und über die Wickelkernzentrierung allein eine gleichmäßige Bandführung bewirken soll. Außer den besagten Falzpressungen besitzt die bekannte Folie keine besonderen Eigenschaften und wirkt daher wie eine reine glatte Tonbandgleitführung.

Mit der JP-OS 48/83 817 ist eine dachartig geformte Knickfolie mit radialen Einschnitten an den Folienenden bekannt. Die relativ weit außen, bezogen auf den Maximaldurchmesser des Bandwickels liegenden Führungsknicke sind nachteilig, da sie Stufenbildung der Bandwickel hervorrufen. Die Einschnitte vermindern zwar die auf den auf- bzw. ablaufenden Bandabschnitt ausgeübte Folienfederkraft beseitigen trotz der Einschnitte jedoch nicht einen möglichen Kontakt zwischen Band und Folienteilen, so daß Bandumklappen und -beschädigungen auftreten können.

Es sind ferner Folien für Magnetbandkassetten bekannt (DE-OS 27 32 083), die mit radial den Bandwickeln zugewandten, darüber und darunter angeordneten Rippen ausgebildet sind. Diese Rippen dienen zur Zentrierung des Bandwickels, sind jedoch besonders im Ein- und Auslaufbereich jedes Bandwickels vorgesehen, wodurch die nicht erwünschten Berührungen zwischen Band und Rippen erfolgen.

Es ist eine Compact-Cassette bekannt, die Folien mit je drei zueinander parallel liegenden Bogenprägungen besitzen, wobei sich die zwei dazwischen liegenden Kanten und die zwei Längsaußenkanten an der jeweiligen Kasetteninnenwand abstützen. Die Längsaußenkanten sind außerdem mit Lappenfortsätzen ausgebildet, die zur Kassettenrückseite hin den maximalen Bandwickel gerade überdecken zur Frontseite der Kassette hin jedoch nicht über den ganzen Bandwickel reichen.

Der Mittelbogen liegt symmetrisch zur Verbindungslinie der Wickelkernmittelpunkte. Die Seitenbögen liegen mit ihren Mittellinien innerhalb der ersten Hälfte des maximalen Radius des oder der Bandwickel(s). Dadurch wird erreicht, daß praktisch über den gesamten Radius, also praktisch über den gesamten Wickelbereich vom fast leeren bis zum vollgewickelten Wickelkern unveränderte Abstützkräfte schmal und streifenförmig auf den Bandwickel wirken. Der Mittelbogen übt ebenfalls einen über den ganzen Wickelbereich relativ konstanten, streifenförmigen Druck auf die Wickelkerne aus. In jedem Fall ist die "Streifen"-Andruckkraft von der Form des Bogens und den Federeigenschaften des Materials abhängig und wird bei Herstellung unveränderbar eingestellt. Die Folienrandteile zwischen den Seitenbogen-Mittellinien und dem Außenrand der Lappenfortsätze üben außer, daß sie stellenweise und zeitweise als Gleitflächen dienen, keinerlei Führungsfunktion auf den oder die Bandwickel aus. Lediglich durch den Mittelbogen wird eine konstante Andruckkraft streifenförmig auf die Wickelkerne ausgeübt.

Damit wird eine Haltekraft mit schmaler Basis auf den bzw. die Wickelkerne erzeugt, zur Zentrierung reicht diese Maßnahme nicht aus. Ferner ist nachteilig, daß bereits die ersten Bandwindungen wegen des am Wickelkernumfang angeordneten Anfangs der Bogenform der Seitenbögen nicht zentrisch auf den Wickelkern gewickelt werden. Außerdem werden die äußeren Bandwindungen des vollen Bandwickels mittels der Lappenfortsätze nahezu kaum wirksam gehalten.

Der Erfindung liegt die Aufgabe zugrunde, eine Bandkassette mit Führungsfolien auszubilden, die großserienmäßige Herstellungsvorteile bietet als auch Vorteile beim Betrieb beim Benutzer aufweist, insbesondere sollen die Spul- und Laufeigenschaften der Kassetten verbessert werden.

Die Erfindung löst diese Aufgabe mit einer Bandkassette der eingangs definierten Art dadurch, daß die Folien im Mittelbereich Längsknicke aufweisen, die innerhalb des Außendurchmessers des Wickelkerns angeordnet sind, die an der inneren Boden- bzw. Deckelwand der Kassetten anliegen und zwischen denen ein relativ flacher Mittelteil vorgesehen ist, und daß die Rückseiten- und Frontseitenfolienbereiche gegenüber dem Mittelteil im Winkel abgeknickt sind, so daß diese auf den Umfang des leeren Wickelkerns oder auf den Bandwickel Federdruckkräfte ausüben, wodurch sich der relativ flache Mittelteil in Richtung des oder der Wickelkerne bogenförmig aufwölbt und auf letztere eine kontinuierlich anwachsend Druckkraft ausübt, die bei leerem Wickelkern einen Mindestwert im Bereich von ca. 1 cN bis ca. 4 cN und bei vollem Bandwickel einen Maximalwert von ca. 7 cN bis 15 cN besitzt.

Dadurch wird erreicht, daß die Zentrierung des oder der Bandwickel verbessert wird bei gleichzeitiger Erhöhung der Sicherheit gegen Umklappen und Abrutschen des Bandes, so daß die Einspulgeschwindigkeiten bei der Herstellung der Kassette um ein Mehrfaches gesteigert werden können gegenüber herkömmlichen Bandkassetten, mit üblichen Gleitfolien, die eine im wesentlichen konstante Federkennlinie besitzen.

In praktischer Ausbildung kann der Rückseitenfolienbereich durch einen bis zu den Folienschmalseiten reichenden, durchgehenden Längsknick gebildet werden.

Zweckmäßig kann der Frontseitenfolienbereich durch mindestens einen Knick gebildet werden, der sich im wesentlichen in Folienlängsrichtung erstreckt, der vor dem Ein- bzw. Auslaufbreich des Bandes auf den bzw. vom Bandwickel endet und der eine Aufwölbung des Einlaufs-/bzw. Auslaufbereichs der Folie bewirkt.

Damit ist eine einfache Folienausbildung und -herstellung gewährleistet, die sowohl im Kalt- als auch im Warmprägeverfahren erfolgen kann.

Die Druckkraft-Charakteristik im angegebenen Bereich ist in der Praxis überraschenderweise erreichbar und stellt sicher, daß die Zentrierkräfte bei anwachsendem Wickeldurchmesser ebenfalls anwachsen, um den dann wirkenden, größeren Störkräften, die den Bandwickellauf beeinflussen könnten, systematisch entgegenzuwirken. Ebenso ist der leere Wickelkern durch die Mindestdruckkraft gerade so zentrisch gehalten, daß die ersten Bandwindungen sauber aufzuwickeln sind.

Zweckmäßig soll der Mindestwert der eingestellten Druckkraft vorzugsweise ca. 2 cN und der Maximalwert vorzugsweise ca. 10 cN betragen.

Zweckmäßig kann die beanspruchte Druckkraft-Charakteristik mittels einer Folie, deren Folienrandbereiche in Richtung zur Kassettenmittelebene um einen Winkel im Bereich von ca. 8° bis 30°, insbesondere von ca. 10 bis ca. 25°, abgeknickt sind, erzeugt werden.

In praktischer Ausgestaltung kann der Frontseitenfolienbereich um ca. 13° bis 20° und der Rückseitenfolienbereich um ca. 20° gegenüber der Kassettenmittelebene abgeknickt sein. Mit diesen Winkelabknickungen werden praktisch ausreichende Druckkraftwerte, vorzugsweise mit einer 50 μm Polyesterfolie, erreicht.

Durch erwähnte Prägeverfahren ist ein Einstellen der gewünschten Winkel und damit der gewünschten Druckkräfte einfach und wirtschaftlich in großen Stückzahlen möglich.

Zweckmäßig liegt der Gradient der Druckkraft in Abhängigkeit vom momentanen Bandwickeldurchmesser im Bereich von etwa 0,1 cN/mm bis etwa 0,3 cN/mm und fällt vorzugsweise von etwa 0,3 cN/mm im Bereich der Mindestdruckkraft bis etwa 0,1 cN/mm im Bereich der Maximaldruckkraft ab.

In zweckmäßiger Ausbildung der Kassette besitzt der Längsknick für den Rückseitenfolienbereich der Folien einen größeren Abstand von der Folienrückkante als der Längsknick für den Frontseitenfolienbereich von der Folienfrontkante. Dadurch können auf den an der Kassettenrückseite liegenden Bandwickelbereich größere Federandruckkräfte ausgeübt werden als auf den Bandwickelbereich nahe der Frontseite der Kassette.

In einer Variante der erfindungsgemäßen Kassette kann die Folie in den Einund Auslaufbereichen Folien-Ausschnitte aufweisen, durch die das Band in der Nähe des Bandwickelumfangs gelangt.

In weiterer Ausgestaltung der Erfindung können in den Ein- und Auslaufbereichen der Folien Bandführungselemente vorgesehen sein, die das Band bis zum bzw. vom Wickelumfang leiten.

Zweckmäßig kann zum Erreichen der Druckkraftwerte der Folien in der Kassette eine 50 μm dicke Polyesterfolie benutzt werden.

Einzelheiten der Erfindung sind den im folgenden beschriebenen und in den Zeichnungen dargestellten Ausführungsbeispielen entnehmbar. Die Zeichnungen zeigen in

| | |
|---|---|
| Figur 1 | eine perspektivische Ansicht einer unbelasteten Führungsfolie für eine Kassette nach der Erfindung |
| Figur 1a | eine Seitenansicht der Führungsfolie nach Figur 1 |
| Figur 2 | eine Draufsicht auf die Führungsfolie der Figur 1 |
| Figur 2a | einen Querschnitt der Folie gemäß Schnittlinie I-I |
| Figur 3 | eine Folie in einer schematischen Kassette nach der Erfindung mit Wölbungsbereichen |
| Figur 4 | eine Folie in einer schematischen Kassette nach der Erfindung mit Kontaktbereichen zum Wickelkern und Bandwickel |
| Figur 5A-5C | eine Querschnittsansicht einer Kassette nach der Erfindung mit verschiedenen Bandwickelgrößen |
| Figur 6 | eine Querschnittsdarstellung einer Folie mit beschwerten Randbereichen für eine Kassette nach der Erfindung. |
| Figur 7 | Darstellungen von Kurven der wirksamen Andruckkräfte der Folien in Abhängigkeit vom momentanen Bandwickeldurchmesser. |

Die Folie 10 hat eine schiefdachförmige Ausbildung, wobei die durchgehende Längsknickkante 11 die höchste Linie darstellt. Die zweithöchste Linie, die nicht durchgehende Knickkante 12 endet deutlich vor den Schmalkanten 19, 20 der Folie und erstreckt sich über die Längsausdehnung der Kreisausschnitte 13, 14 hinaus. Die Längsaußenkanten 15, 16 liegen auf der planen Stützebene 23, die schraffiert dargestellt ist, auf. Alle anderen Umrißkanten, Schrägen 17, 18 und Schmalkanten 19, 20 haben keinen Kontakt mit der Stützebene. In der Zeichnung ragen also deutlich erkennbar die Schmalenden 21 und 22 über die Stützebene 23 hinaus.

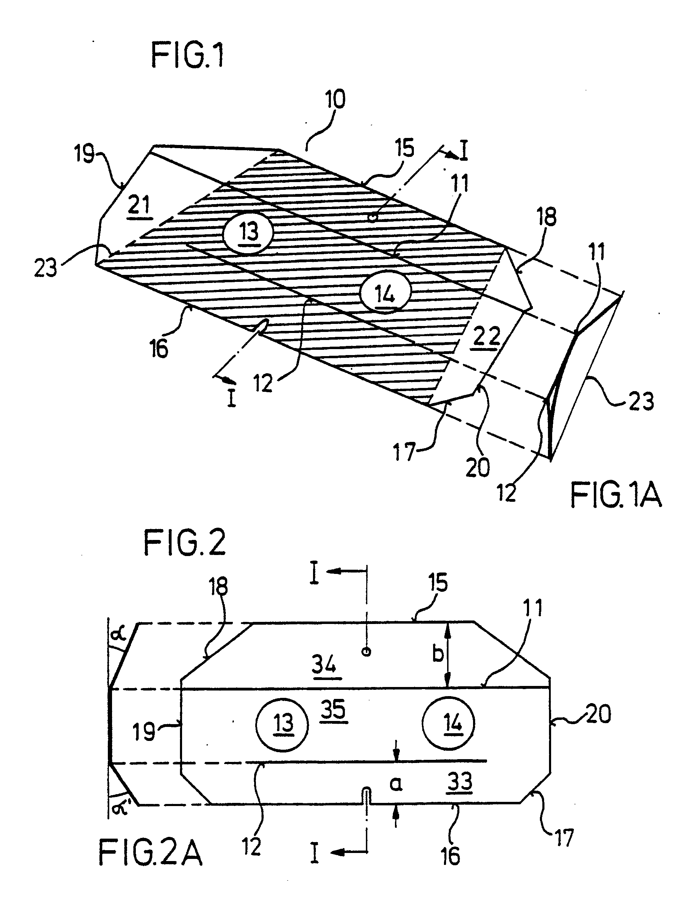

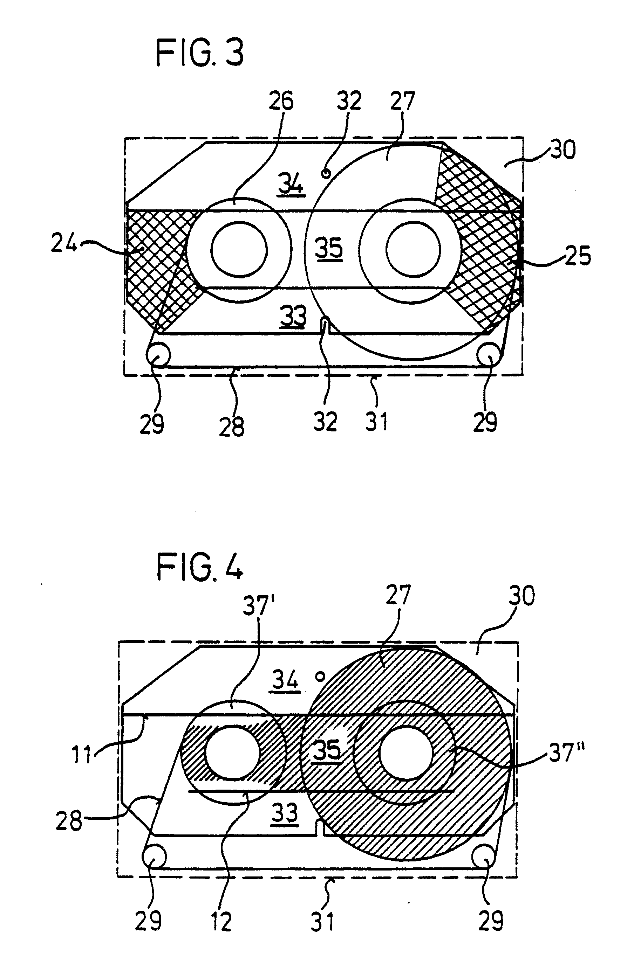

Figur 1a zeigt eine abgerundete Aufwölbung der Schmalenden 21 und 22, die sich dadurch bildet, daß sich die Knickkante 12 nicht bis zu den Schmalkanten 19, 20 erstreckt, sondern deutlich vorher endet. In Figur 3 ist gezeigt, wie weit sich die Aufwölbungsbereiche 24 und 25 erstrecken im räumlichen Zusammenhang mit der Lage der Bandwickel 26 und 27 in einer Zweispulenkassette 30, insbesondere einer Kompakt-Kassette. Das Band 28 wird darin über Umlenkrollen 29 längs der Frontseite 31 der Kassette 30, woher der nicht dargestellte Kopf an das Band 28 herantritt, entlanggeführt. 32 sind Haltezapfen für die Folie 10, die selbst entsprechende Ausschnitte besitzt.

Die auf den jeweiligen Bandwickelumfang auflaufenden bzw. davon ablaufenden Abschnitte des Bandes 28 befinden sich innerhalb der Aufwölbungsbereiche 24 und 25, innerhalb derer eine Führung des Bandes 28 durch die Folien 10 erfolgen soll, um das Band in vorbestimmter Lage aufwickeln bzw. abwickeln zu können. Die Knickkante 12 ist nicht zu den Schmalkanten 19, 20 durchgängig ausgebildet, um Bandlaufbeeinflussungen wie Umklappen, -ablenken usw. und Bandbeschädigungen wie Bandkantenabrieb usw. vermeiden. Durch die Länge der nicht durchgehenden Knickkante 12 können die Aufwölbungsbereiche 24 und 25 in Form und Lage variiert werden.

Wie Figur 2 zeigt, ist der Hauptteil der Folie 10 dachförmig zur Mittelebene der Kassette 30 hin abgebogen ausgebildet. Dieser Hauptteil fällt etwa mit der schraffierten Stützebene 23 der Figur 1 flächenmäßig zusammen. Die Stützebene 23 entspricht innerhalb der Kassette 30 im wesentlichen der Kassettenmittelebene.

Die Folie 10 weist rückwärtig den Rückseitenfolienbereich 33 auf, der zwischen dem Längknick 11 und der Rückkante 15 liegt, und besitzt frontseitig den Frontseitenfolienbereich 34 der zwischen der Knickkante 12 und der Frontseitenkante 16 der Folie 10 liegt. Beide Folienbereiche sollen, vorausgesetzt, das Folienmaterial ist eine 50 μm starke Polyesterfolie vom Typ RN50 der Fa. Kalle, Wiesbaden, im Winkelbereich $\alpha, \alpha'$ von etwa 8° bis etwa 30°, insbesondere von etwa 10° bis etwa 25° zu einer Horizontalebene, z.B. zur Mittelebene der Kassette 30 abgeknickt sein. Praktisch haben sich bei den gewählten Größenverhältnissen der Folienbereiche 33 und 34 Winkel von $\alpha'$ = 13° bis 20° beim Frontseitenbereich 33 und $\alpha$ = 20° beim Rückseitenbereich 34 als günstig erwiesen, aber es sind auch andere Winkelabknickungen, die einfach im Prägeverfahren realisierbar sind, möglich. Der praktische Knickwinkel $\alpha'$ liegt bei 20°, der sich jedoch nur in der Mitte des Bereichs 33 einstellt. Die Ein- und Auslaubereiche besitzen dann einen Winkel von ca. 13°. Im Ausführungsbeispiel ist der Abstand a) der Knickkante 12 von der Vorderkante 16 der Folie 10 kleiner als der Abstand b) der Knickkante 11 von der Rückkante 15, so daß die entsprechenden Hebelarme b) > a) sind.

Durch Winkelgrößen $\alpha,\alpha'$ und Hebelarme a) und b) lassen sich überraschenderweise die Druck- oder Haltekräfte der Folien 10 in ihrem Mittelteil 35 einstellen und von einer Grundeinstellung, z.B. bei leerem Wickelkern ist vorteilhafterweise eine vom momentanen Istdurchmesser des Bandwickels abhängige Andruck- oder Haltekraft am Wickelkern oder an den Wickelkernen ausübbar. Diese Andruck- oder Haltekraft, die zum Halten und Zentrieren des oder der Wickelkerne und damit auch des gerade darauf befindlichen Bandwickels dient, ist praktisch im Bereich von ca. 1 bis ca. 4 cN (bei leerem Wickelkern) und von ca. 7 cN bis etwa 10 cN (bei vollem Bandwickel) variierbar, vorzugsweise liegen dieselben bei ca. 2 cN bzw. 7,5 cN. Dabei sind überraschend die Bandwickelandruckkräfte im Rückbereich 34 mit ca. 1 bis 4 cN größer als im Frontbereich 33 mit ca. 0,5 bis 3 cN.

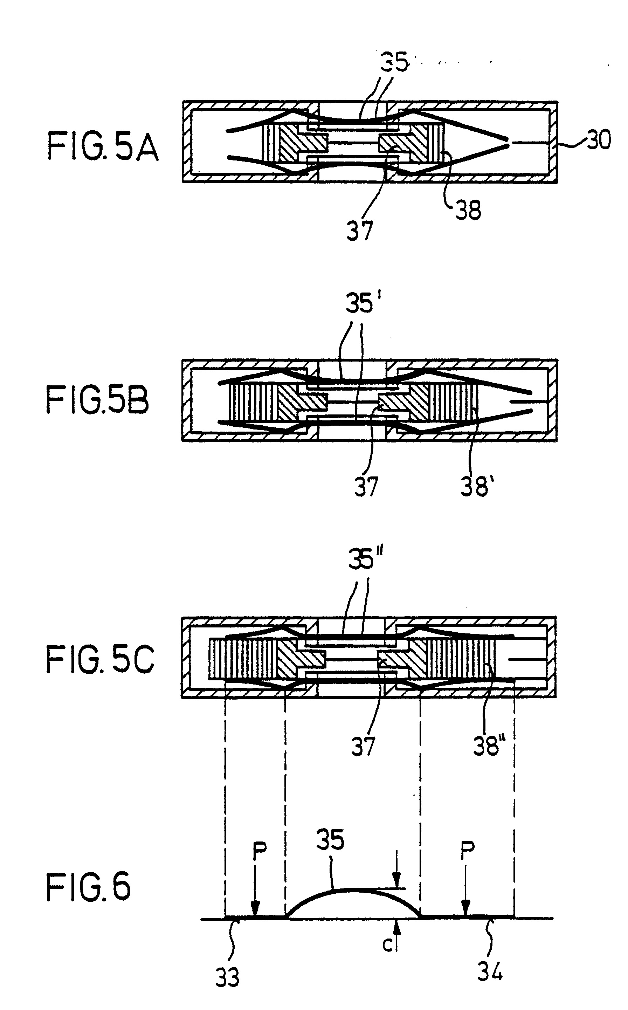

Der auf die Wickelkerne ausgeübte Variationsdruck ist in Figuren 5A bis 5C bildlich dargestellt. In Figur 5A ist der Wickelkern 37 in der Kassette 30 mit wenigen Bandwindungen bewickelt, trägt also einen sehr kleinen Bandwickel 38, der mit 38' größer ist in Figur 5B und seine volle Größe mit 38" in Figur 5C erreicht. Beim Vergleich der Krümmungen der Wölbungen des Folienmittelteils 35 ist die größte Krümmung (35) mit der kürzesten Kontaktlinie in Figur 5A vorhanden, die über Figur 5B bei halbem Wickeldurchmesser deutlich kleiner ist mit bereits längerer Kontaktlinie (35') und die sich noch weiter verringert in Figur 5C zur längsten Kontaktlinie (35"). Die Andruck- und Haltekräfte betragen praktisch etwa 2 bis 3 cN in Fig. 5A, 4 bis 6 cN in Fig. 5B und 6,5 bis 7,5 cN in Figur 5C.

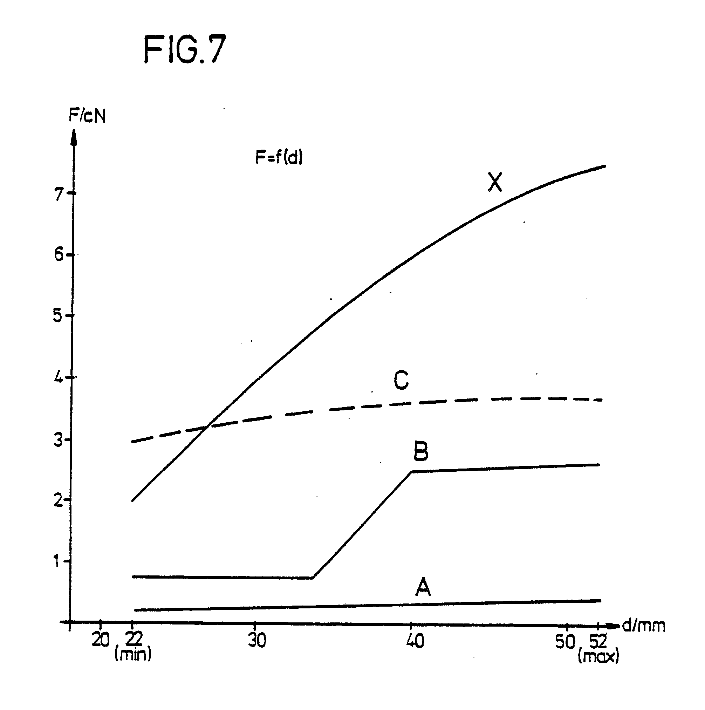

Die kontinuierliche Abhängigkeit der Andruck- und Haltekraft vom Bandwickel-Momentandurchmesser geht aus den Meßkurven in Figur 7 hervor, wie weiter unten beschrieben.

Figur 6 zeigt die Folie 10, wenn die Seitenbereiche 33 und 34 durch Auflagekräfte P plangedrückt werden, wodurch der Mittelteil 35 gewölbt wird. Die Wölbungshöhe c beträgt für eine Folie 10 für eine Kompaktkassette mit 50 μm Polyesterfolie $c \approx 1,5$ mm.

Die unbelastete Polyesterfolie besaß dabei eine Höhe des rückwärtigen Knickes 11 im Bereich von 6 ± 1 mm und des vorderen Knickes 12 von 4 ± 0,5 mm. Diese Werte liegen auch den folgenden Messungen zugrunde.

Die Wölbung und die damit erzeugte Federkennlinie ist für die Verhältnisse in der Kompaktkassette mit dem freien Innenmaß zwischen Wickelkern und Innenwand von 2 × 0,6 mm ausreichend und liefert ausgezeichnete Stabilitäts- und Bandlaufergebnisse.

In Figur 4 sind die Momentan-Kontaktverhältnisse in der Kassette 30 dargestellt, wenn ein Wik-kelkern leer und der andere voll bewickelt ist. Es wird deutlich, daß der leichte Wickelkern 37' mit geringerer Andruck- und Haltekraft gehalten wird als der Wickelkern 37". Der Bandwickel 27 wird außerdem noch beidseitig von den Folienbereichen 33 und 34, wenn auch mit geringer Andruck- und Haltekraft von ca. 0,5 bis ca. 4 cN gehalten.

Mit diesen Kräfteverhältnissen werden Kassetten mit ausgezeichneten Bandlauf- und Wickeleigenschaften herstellbar, die mechanisch und dynamisch hervorragende Meßergebnisse liefern.

In Figur 7 sind die Kurven F = f (d), also die wirksamen Andruck- und Haltekraft F in Abhängigkeit vom momentanen Durchmesser des Bandwickels dargestellt. Dabei liegt bei 22 mm der Wickelkerndurchmesser und bei 52 der maximale Bandwickeldurchmesser, und damit sind Anfang und Ende des Meßbereichs gegeben.

Die Druckkräfte F wurden jeweils für verschiedene Wickeldurchmesser mittels Aluminiumscheiben von verschiedenen Durchmessern und über eine Kraftmeßdose nach induktivem Wegaufnehmerprinzip gemessen. Die kraftmeßdose stammt von der Firma Hottinger-Baldwin.

Bei der Versuchsdurchführung werden die Folien im Kassetten-Bodenteil simuliert durch Auflegen der Scheiben und Messen der Kräfte die aufzubringen sind, um die Folie auf 0,6 mm Resthöhe entsprechend dem Zwischenraum zwischen Bandwickelseitenfläche und Kasseteninnenwand, zusammenzudrücken.

Die Kurven der Figur 7 bedeuten folgende Folientypen:

A)　Bogenfolie der oben beschriebenen bekannten Compact-Cassette vom Typ UDI eines japanischen Herstellers

B)　Z-förmig geknickte Folie der Anmelderin ähnlich der DE-PS 22 51 746

c)　Teflonfolie mit Kreisprägungen

X)　die beschriebene dynamische Folie vorliegender Erfindung.

Kurvendiskussion:

Die Kurven A und C zeigen über den gesamten Meßbereich nahezu konstantes Druckkraftverhalten. Sie wirken damit wie statische Gleitpolster ohne jegliche dynamische Eigenschaften. Die Kurve B zeigt kurzzeitig, räumlich etwa zwischen 33 und 40 mm Durchmesser, ein dynamisches Verhalten, insgesamt jedoch eine Stufen-Druckkraft-Charakteristik. die eine entsprechende Stufenausbildung des Wickels sozusagen vorprogrammiert.

Die Kurve X zeigt einen stetigen. ansteigenden Verlauf, deren Steigung im Bereich von 0.3 cN/mm bis 0,1 cN/mm (letztere im oberen Durchmesserbereich) liegt.

Ein voller Bandwickel wird demmach mit ca. 7,5 cN (Centi Newton) im Vergleich zu ca. 2 cN bei leerem Wickelkern gehalten. Der Gewichtszuwachs wird somit ausgleichbar und ein voller Wickel wird nahezu eben so stabil gehalten und damit zentriert wie der leere Wickelkern.

Die Einspulgeschwindigkeit des Bandes in Leerkassetten konnte mit der erfindungsgumäßen X-Folie auf etwa das 4-fache gegenüber Kassetten mit Gleitfolien (z.B. A und C, s.o.) gesteigert werden. Einspulgeschwindigkeiten von 15 und 35 m/sec wurden in der Praxis erreicht, bei guten Wickelergebnissen (glatte Bandwickel).

Beim Kassettenbetrieb wurden folgende Vorteile erzielt:

Infolge der mechanisch und dynamischen Spul- und Zentrierverbesserungen wurden gegenüber herkömmlichen Kassetten wesentlich niedrigere Pegelschwankungen gemessen. Das auftreten von mechanischen Festlauf- und Umklappfehlern konnte erheblich reduziert werden, z.B. gegenüber cc mit der Z-Folie (Kurve 8 in Figur 7) um den Faktor 4. Ebenfalls war es möglich, die Laufgeräusche um etwa den Faktor 2 zu reduzieren. Mittels der nicht durchgehenden Knickkante 12 konnten Bandumklapp-Fehler fast vollständig eliminiert werden.

**Ansprüche**

1. Bandkassette, insbeondere Magnetbandkassette, mit mindestens einem Bandwickel auf einem im wesentlichen flanschlosen Wickelkern mit einem Außendurchmesser, auf den und/oder von dem ein Band auf- bzw. abwikkelbar ist, wobei zwischen dem Bandwindungen aufweisenden Bandwickel und den Boden- und Deckelwänden der Kassette Folien mit in Richtung zur Mittelebene der Kassette abgebogenen oder abgeknickten, einander zugeordneten und in bezug auf die Kassettenmittelachse einander gegenüberliegenden Folienbereichen vorgesehen sind, die federnd auf den oder die Bandwickel drücken, wobei der Foliendruck auf den Bandwickelumfang, der der Kassettenrückseite zugewandt ist, durch den Rückseitenfolienbereich (34) ausgeübt wird, und der Foliendrck auf den Bandwickelvorderteil, der der Kassettenfontseite (31) zugewandt ist, durch den Frontseitenfolienbereich (33) ausgeübt wird, dadurch gekennzeichnet,

daß die Folien (10) im Mittelbereich Längsknikke (11, 12) aufweisen, die innerhalb des Außendurchmessers des Wickelkerns (25, 17) angeordnet sind, die an der inneren Boden- bzw. Deckelwand der Kassette (30) anliegen und zwischen denen ein relativ flacher Mittelteil (35) vorgesehen ist, und

daß die Rückseiten- und Frontseitenfolienbereiche gegenüber dem Mittelteil (35) im Winkel (α,α') abgeknickt sind, so daß diese auf den Umfang des leeren Wickelkerns (26, 37) oder auf den Bandwickel (27, 38') Federdruckkräfte ausüben, wodurch sich der relativ flache Mittelteil (35) in Richtung des oder der Wickelkerne (26, 37) bogenförmig aufwölbt und auf letztere eine kontinuierlich anwachsende Druckkraft ausübt, die bei leerem Wickelkern (26, 37) einen Mindestwert im Bereich von ca. 1 cN bis ca. 4 cN und bei vollem Bandwickel (27, 38') einen Maximalwert im Bereich von ca. 7 cN bis 15 cN besitzt.

2. Kassette nach Anspruch 1, dadurch gekennzeichnet, daß der Rückseitenfolienbereich (34) durch einen bis zu den Folienschmalseiten (19, 20) reichenden, durchgehenden Längsknick (11) gebildet wird.

3. Kassette nach Anspruch 1, dadurch gekennzeichnet, daß der Frontseitenfolienbereich (33) durch mindestens einen Knick (12) gebildet wird, der sich im wesentlichen in Folienlängsrichtung erstreckt, der vor dem Ein- bzw. Auslaufbereich des Bandes (28) auf den bzw. von dem Bandwickel (27, 38') endet und der eine Aufwölbung des Einlaufs-/bzw. Auslaufbereichs der Folien (10) bewirkt.

4. Kassette nach Anspruch 1, dadurch gekennzeichnet, daß der Mindestwert der Druckkraft vorzugsweise bei ca. 2 cN liegt und der Maximalwert vorzugsweise bei ca. 10 cN liegt.

5. Kassette nach Anspruch 1 oder 4, dadurch gekennzeichnet, daß der Gradient der Druckkraft in Abhkängigkeit von momentanen Bandwickeldurchmesser im Bereich von etwa 0,1 cN/mm bis etwa 0,3 cN/mm liegt und vorzugsweise von etwa 0,3 cN/mm im Bereich der Mindestdruckkraft bis etwa 0,1 cN/mm im Bereich der Maximaldruckkraft abfällt.

6. Kassette nach Ansprüchen 1 bis 5, dadurch gekennzeichnet, daß die Rückseitenund Frontseitenfolienbereiche der Folien (10) gegenüber dem Mittelteil (35) im Winkelbereich (∝,∝) von ca. 8° bis ca. 30° abgeknickt sind, wodurch auf den Umfang des leeren Wickelkerns (26, 37) oder auf den Bandwickel (27, 38') die kontinuierlich anwachsenden Druckkräfte ausübbar sind.

7. Kassette nach Anspruch 6, dadurch gekennzeichnet, daß die Rückseiten- und Frontseitenfolienbereiche (34 bzw. 33) der Folien (10) in einem Winkelbereich von ca. 10° bis 25° abgeknickt sind.

8. Kassette nach Anspruch 6, dadurch gekennzeichnet, daß der Frontseitenfolienbereich (33) der Folien (10) um ca. 13° bis 20° und der Rückseitenfolienbereich um ca. 20° gegenüber dem Mittelteil (35) abgeknickt ist.

9. Kassette nach einem der Ansprüche 7 und 8, dadurch gekennzeichnet, daß der Rückseitenfolienbereich (34) der Folien (10) durch einen bis zu den Folienschmalseiten (19, 20) reichenden, durchgehenden Längsknick (11) gebildet wird und der Frontseitenfolienbereich (33) durch mindestens einen Knick (12) gebildet wird, der sich im wesentlichen in Folienlängsrichtung erstreckt und der im Abstand vor den Folienschmalseiten (19, 20) endet.

10. Kassette nach einem der Ansprüche 6 bis 9, dadurch gekennzeichnet, daß der Längsknick (12) für den Frontseitenfolienbereich der Folien (10) einen geringeren Abstand von der Vorderkante (16) der Folien (10) aufweist als der Längsknick (11) für den Rückseitenfolienbereich (34) von der Rückkante (15) der Folien (10).

11. Kassette nach einem der Ansprüche 7 bis 10, dadurch gekennzeichnet, daß die Folien (10) aus einem 50 $\mu$m dicken Polyesterfolienmaterial bestehen.

12. Kassette nach einem der Ansprüche 6 bis 11, dadurch gekennzeichnet, daß die Folie (10) im Ein- und Auslaufbereich Folien-Ausschnitte aufweist, durch die das Band in die Nähe des Bandwickelumfangs gelangt.

13. Kassette nach einem der Ansprüche 1 bis 12, dadurch gekennzeichnet, daß im Ein- und Auslaufbereich der Folien (10) für das Band Bandführungselemente vorgesehen sind, die das Band bis zum Bandwickelumfang hin bzw. vom Bandwickelumfang fort leiten.

## Claims

1. A tape cassette, in particular a magnetic tape cassette, which possesses one or more rolls of tape on an essentially flangeless hub having an external diameter onto which a tape can be wound and/or from which a tape can be unwound, liners which have regions which are bent over or folded over toward the middle plane of the cassette, correspond to one another, are opposite one another with respect to the central axis of the cassette and exert a spring force on the roll or rolls of tape being provided between the tape roll, containing the tape windings, and the bottom and lid walls of the cassette, the liner pressure on the tape roll periphery which faces the back of the cassette being exerted by the back liner area (34) and the liner pressure on the front part of the tape roll, which faces the front (31) of the cassette, being exerted by the front liner area (33), wherein the liners (10) have longitudinal folds (11, 12) in the central area which are located within the outer diameter of the hub (25, 17) and are adjacent to the inner bottom and lid walls of the cassette (30) and between which a relatively flat central part (35) is provided, and the back and front areas of the liners are bent through an angle $(\alpha, \alpha')$ with respect to the central part (35), so that these areas exert spring forces on the periphery of the empty hub (26, 37) or on the tape roll (27, 38') with the result that the relatively flat central part (35) arches toward the hub or hubs (26, 37) and exerts a continuously increasing compressive force on the latter, the said force having a minimum value from about 1 cN to about 4 cN when the hub (26, 37) is empty and a maximum value from about 7 cN to 15 cN when the roll of tape (27, 38') is full.

2. A cassette as claimed in claim 1, wherein the back area (34) of the liner is formed by a continuous longitudinal fold (11) extending as far as the narrow sides (19, 20) of the liner.

3. A cassette as claimed in claim 1, wherein the front area (33) of the liner is formed by one or more folds (12) which extend essentially in the longitudinal direction of the liner, end before the run-in and run-out area of the tape (28) to and from the tape roll (27, 38') and cause the run-in and run-out area of the liner (10) to curve.

4. A cassette as claimed in claim 1, wherein the minimum value of the compressive force is preferably about 2 cN, and the maximum value is preferably about 10 cN.

5. A cassette as claimed in claim 1 or 4, wherein the gradient of the compressive force as a function of the instantaneous tape roll diameter is from about 0.1 to about 0.3 cN/mm, and decreases preferably from about 0.3 cN/mm in the region of the minimum compressive force to about 0.1 cN/mm in the region of the maximum compressive force.

6. A cassette as claimed in claims 1 to 5, wherein the back and front areas of the liners (10) are folded through an angle (α, α') of from about 8° to about 30° relative to the central part (35), with the result that the continuously increasing compressive forces can be exerted on the circumference of the empty hub (26, 37) or on the tape roll (27, 38').

7. A cassette as claimed in claim 6, wherein the back and front areas (34 and 33 respectively) of the liners (10) are folded through an angle of about 10 - 25°.

8. A cassette as claimed in claim 6, wherein the front area (33) of the liner (10) is folded through about 13 - 20° and the back area of the liner through about 20° relative to the central part (35).

9. A cassette as claimed in either of claims 7 or 8, wherein the back area (34) of the liners (10) are formed by a continuous longitudinal fold (11) extending as far as the narrow sides (19, 20) of the liner and the front area (33) of the liner is formed by one or more folds (12) which extend essentially in the longitudinal direction of the liner and end a distance away from the narrow sides (19, 20) of the liner.

10. A cassette as claimed in any of claims 6 to 9, wherein the distance of the longitudinal fold (12) for the front area of the liners (10) from the front edge (16) of the liners (10) is smaller than the distance of the longitudinal fold (11) for the back area (34) of the liners from the back edge (15) of the liners (10).

11. A cassette as claimed in any of claims 7 to 10, wherein the liners (10) consist of a 50 mm thick polyester film material.

12. A cassette as claimed in any of claims 6 to 11, wherein the liner (10) possesses, in the run-in and run-out area, cutouts, through which the tape passes into the region of the periphery of the tape roll.

13. A cassette as claimed in any of claims 1 to 12, wherein tape guide elements which guide the tape to or from the periphery of the tape roll are provided in the run-in and run-out area of the liners (10) for the tape.

**Revendications**

1. Cassette de bande, en particulier cassette de bande magnétique, comportant au moins un enroulement de bande sur un noyau en priciPE sans flasques, ayant un diamètre extérieur sur lequel une bande peut être enroulée et/ou duquel une bande peut être déroulée, entre l'enroulement de bande présentant des spires et les parois de fond et de couvercle de la cassette étant prévues des feuilles ayant des zones recourbées ou cassées vers le plan médian de la cassette, associées et opposées par rapport à l'axe de la cassette qui exercent élastiquement une pression sur l'enroulement ou les enroulements de bande, la pression sur le pourtour de l'enroulement dirigé vers le côté arrière de la cassette étant exercée par la zone côté arrière (34) des feuilles et la pression sur la partie avant de l'enroulement dirigée vers le côté avant (31) de la cassette étant exercée par la zone côté avant (33) des feuilles, caractérisée par le fait que les feuilles (10) présentent dans leur zone médiane des plis longitudinaux (11, 12) qui sont situés à l'intérieur du diamètre extérieur du noyau (25, 17) et s'appuient sur la paroi intérieure de fond ou de couvercle de la cassette (30) et entre lesquels est prévue une partie médiane relativement plate (35), et que les zones côté arrière et côté avant des feuilles sont cassées d'un certain angle (α, α') par rapport à la partie médiane (35), de sorte qu'elles exercent sur le pourtour du noyau vide (26, 37') ou sur l'enroulement de bande (27, 38') des forces de pression élastiques qui font que la partie médiane relativement plate (35) se cintre en direction du ou des noyaux (26, 37) et exerce sur celui-ci ou ceux-ci une force de pression croissant de façon continue qui a, dans le cas d'un noyau vide (26, 37'), une valeur minimale d'environ 1 cN à environ 4 cN et, dans le cas d'un enroulement de bande complet (27, 38'), une valeur maximale d'environ 7 cN à 15 cN.

2. Cassette selon la revendication 1, caractérisée par le fait que la zone côté arrière (34) des feuilles est formée par un pli longitudinal continu (11) allant jusqu'aux petits côtés (19, 20) des feuilles.

3. Cassette selon la revendication 1, caractérisée par le fait que la zone côté avant (33) des feuilles est formée par au moins un pli (12) qui s'étend sensiblement dans la direction longitudinale de la feuille, se termine avant la zone où la bande (28) arrive sur l'enroulement (27, 38') ou en part et produit un cintrage de la zone d'arrivée ou de départ des feuilles (10).

4. Cassette selon la revendication 1, caractérisée par le fait que la valeur minimale de la force de pression est de préférence d'environ 2 cN et la valeur maximale de préférence d'environ 10 cN.

5. Cassette selon l'une des revendications 1 et 4, caractérisée par le fait que le gradient de la force de pression en fonction du diamètre momentané de l'enroulement de bande est d'environ 0,1 cN/mm à environ 0,3 cN/mm et de préférence d'environ 0,3 cN/mm dans le domaine de la force minimale de pression à environ 0,1 cN/mm dans le domaine de la force maximale de pression.

6. Cassette selon les revendications 1 à 5, caractérisée par le fait que les zones côté arrière et côté avant des feuilles (10) sont cassées par rapport à la partie médiane (35) d'un angle ($\alpha$, $\alpha'$) d'environ 8 degrés à environ 30 degrés, de sorte que les forces de pression croissant de façon continue peuvent s'exercer sur le pourtour du noyau vide (26, 37') ou sur l'enroulement de bande (27, 38').

7. Cassette selon la revendication 6, caractérisée par le fait que les zones côté arrière et côté avant (34 et 33) des feuilles (10) sont cassées d'un angle d'environ 10 degrés à 25 degrés.

8. Cassette selon la revendication 6, caractérisée par le fait que la zone côté avant (33) des feuilles (10) est cassée d'environ 13 degrés à 20 degrés et la zone côté arrière (34) cassée d'environ 20 degrés par rapport à la partie médiane (35).

9. Cassette selon l'une des revendications 7 et 8, caractérisée par le fait que la zone côté arrière (34) des feuilles (10) est formée par un pli longitudinal continu (11) allant jusqu'aux petits côtés (19, 20) de la feuille et la zone côté avant (33) formée par au moins un pli (12) qui s'étend sensiblement dans la direction longitudinale de la feuille et se termine à une certaine distance des petits côtés (19, 20) de la feuille.

10. Cassette selon l'une des revendications 6 à 9, caractérisée par le fait que le pli longitudinal (12) formant la zone côté avant des feuilles (10) est à une plus petite distance du bord avant (16) des feuilles (10) que le pli longitudinal (11) formant la zone côté arrière (34) du bord arrière (15) des feuilles (10).

11. Cassette selon l'une des revendications 7 à 10, caractérisée par le fait que les feuilles (10) sont constituées de feuilles de polyester de 50 $\mu$m d'épaisseur.

12. Cassette selon l'une des revendications 6 à 11, caractérisée par le fait que la feuille (10) présente dans la zone d'arrivée et la zone de départ des échancrures par où la bande arrive à proximité du pourtour de l'enroulement de bande.

13. Cassette selon l'une des revendications 1 à 12, caractérisée par le fait que dans la zone d'arrivée et la zone de départ des feuilles (10) sont prévus pour la bande des éléments de guidage qui conduisent celle-ci jusqu'à l'enroulement de bande ou au départ de celui-ci.

# FIG.1

## FIG.1A

# FIG.2

## FIG.2A

# FIG. 3

# FIG. 4

FIG.5A

35

30

37

38

FIG.5B

35'

37

38'

FIG.5C

35"

37

38"

FIG.6

P

35

P

33

c

34

# FIG.7